# EUROPEAN PATENT SPECIFICATION

(11) **EP 3 848 835 B1**
(45) Date of publication and mention of the grant of the patent: **29.05.2024**
(21) Application number: 20215988.5
(22) Date of filing: 21.12.2020
(51) Int. Cl.: G06F 21/56, G06F 21/55, G06F 11/07

(54) **SYSTEMS AND METHODS FOR PROTECTING AGAINST UNAUTHORIZED MEMORY DUMP MODIFICATION**
SYSTEME UND VERFAHREN ZUM SCHUTZ GEGEN UNBEFUGTE SPEICHERAUSZUGSMODIFIKATION
SYSTÈMES ET PROCÉDÉS DE PROTECTION CONTRE LA MODIFICATION NON AUTORISÉE DE VIDAGE DE MÉMOIRE

(30) Priority: 10.01.2020 US 202062959222 P; 07.12.2020 US 202017113195
(43) Date of publication of application: 14.07.2021
(73) Proprietor: Acronis International GmbH, 8200 Schaffhausen (CH)
(72) Inventor: STROGOV, Vladimir, 8200 Schaffhausen (CH); DODZ, Alexey, 8200 Schaffhausen (CH); BELOUSSOV, Serguei, 8200 Schaffhausen (CH); PROTASOV, Stanislav, 8200 Schaffhausen (CH)
(74) Representative: Chimini, Francesco

(56) References cited:
- CN-B- 106 203 121
- US-A1- 2006 294 592
- US-A1- 2012 054 868
- US-B1- 7 802 300
- Michael Hale Ligh ET AL: "The Art of Memory Forensics: Detecting Malware and Threats in Windows, Linux, and Mac Memory" In: "The Art of Memory Forensics: Detecting Malware and Threats in Windows, Linux, and Mac Memory", 11 July 2014 (2014-07-11), John Wiley & Sons, Inc., Indianapolis, IN 46256, XP055495332, ISBN: 978-1-118-82509-9 * figures 13-5, 13-7, 13-8, 13-9 * * Second paragraph and Paragraph "Does it provide any system APIs?"; page 369 * * Section "Stealthy hooks"; page 384 - page 386 * * Section "Auditing the SSDT"; page 390 - page 395 * * Sections "Callbacks in Memory" and "Malicous callbacks"; page 396 - page 399 * * Section "Putting it all together"; page 402 - page 405 *
- SHIMADA HIROMASA ET AL: "Automatically Generating External OS Kernel Integrity Checkers for Detecting Hidden Rootkits", 2014 IEEE 11TH INTL CONF ON UBIQUITOUS INTELLIGENCE AND COMPUTING AND 2014 IEEE 11TH INTL CONF ON AUTONOMIC AND TRUSTED COMPUTING AND 2014 IEEE 14TH INTL CONF ON SCALABLE COMPUTING AND COMMUNICATIONS AND ITS ASSOCIATED WORKSHOPS, IEEE, 9 December 2014 (2014-12-09), pages 441-448, XP032798984, DOI: 10.1109/UIC-ATC-SCALCOM.2014.8 [retrieved on 2015-10-23]

## Description

### FIELD OF TECHNOLOGY

The present disclosure relates to the field of digital forensics, and, more specifically, to systems and methods for protecting against unauthorized memory dump modification.

### BACKGROUND

One of the main methods of digital forensics involves obtaining live dumps of system memory that can be used to investigate digital crimes, including malware attacks, intruders penetrating the system, data theft, modification (e.g., encryption), etc. Specifically, live dumps comprise information about the processes running in memory and enable analysis of such information.

Live dumps are characterized by the fact that they are made on a working system and even after receiving them, the system does not stop - unlike other types of dumps, which are created at the time of the system crash and store information about the system's last state immediately before the crash. Live dumps are created using the built-in tools of the operating system, which includes special methods and functions used for these purposes in their functionality.

Despite the beneficial attributes of live dumps, malicious programs such as rootkits can replace information in a memory dump, and thus complicate or make impossible the process of digital investigation. Rootkits take control of system calls that create live dumps. As a result, "fake" dumps contain modified data in which the traces of the activity of any intruders and malware are completely removed.

An example of such a system can be found in "Michael Hale Ligh ET AL: "The Art of Memory Forensics: Detecting Malware and Threats in Windows, Linux, and Mac Memory", 11 July 2014, John Wiley & Sons, Inc., Indianapolis, IN 46256, XP055495332, ISBN: 978-1-118-82509-9.

Therefore, there is a need for a system and method that can prevent malicious programs from tampering with memory dumps.

### SUM MART

The present invention is defined in the independent claims. Preferred embodiments are defined in the dependent claims. To address these shortcomings, examples of the disclosure describe methods and systems for protecting against unauthorized memory dump modification.

The method comprises producing a memory dump of a computing device, and identifying a current kernel function used for producing the memory dump. In response to determining that the current kernel function is not authorized to produce the memory dump, the method comprises determining that the produced memory dump has been modified, analyzing a call tree to identify an original kernel function authorized to produce memory dumps, and calling the original kernel function to produce an authentic memory dump.

In some examples, determining that the current kernel function is not authorized to produce the memory dump comprises determining that an entry, in a dispatch table, that points to a kernel function for memory dumping has been modified.

In some examples, determining that the entry has been modified comprises determining that an address associated with a system call number in the dispatch table at first time does not match an address associated with the system call number at a second time.

In some examples, determining that the current kernel function is not authorized to produce the memory dump is based on determining that an address of the current kernel function is not in an operating system kernel range of the computing device.

In some examples, analyzing the call tree to identify the original kernel function comprises determining an offset indicating the original kernel function based on contents of an entry in the call tree.

The method comprises determining that the current kernel function is not authorized to produce the memory dump further comprises comparing an on-disk kernel image of the computing device with an in-memory kernel image of the computing device, identifying modified kernel fragments used to produce the memory dump based on the comparison, and determining that the modified kernel fragments are caused by malware.

It should be noted that the methods described above may be implemented in a system comprising a hardware processor. Alternatively, the methods may be implemented using computer executable instructions of a non-transitory computer readable medium.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and exemplarily pointed out in the claims.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
FIG. 1 is a block diagram illustrating a system for protecting against unauthorized memory dump modification.
FIG. 2 is a block diagram illustrating a call tree.
FIG. 3 illustrates a flow diagram of a method for protecting against unauthorized memory dump modification.
FIG. 4 presents an example of a general-purpose computer system on which examples of the present disclosure can be implemented.

### DETAILED DESCRIPTION

Exemplary aspects are described herein in the context of a system, method, and computer program product for protecting against unauthorized memory dump modification. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

Generating a memory dump involves taking all of the information in random access memory (RAM) and writing it to a storage drive. Developers use memory dumps to gather diagnostic information subsequent to a crash for troubleshooting purposes. Using the built-in kernel functions of the operating system, the systems and methods described herein involve producing live memory dumps (specifically raw dumps and system dumps), and protecting them from malicious modifications by finding the original "good" kernel function to get the dump, if the original "good" kernel function has been replaced with a "bad" kernel function.

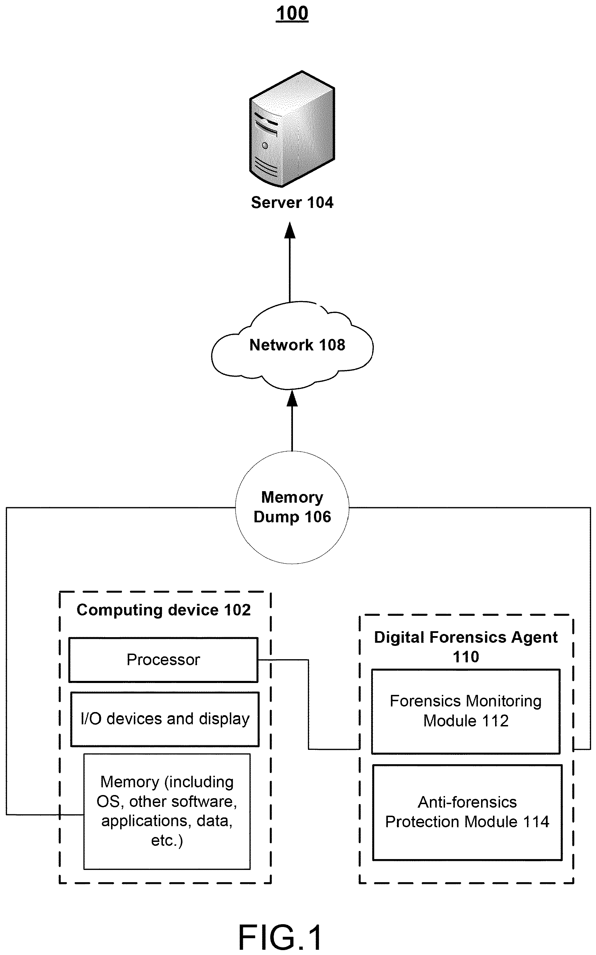

FIG. 1 is a block diagram illustrating system 100 for protecting memory dumps from tampering. System 100 includes computing device 102, which may comprise a personal computer, server, etc., that includes a computer processing unit ("CPU"), and memory that includes software for performing various tasks (e.g., Operating System (OS) software, application software, etc.). Data for computing device 102 may be stored in the memory of the device itself as well as on other external devices such as server 104, a compact disk, flash drive, optical disk, and the like.

In the present disclosure, memory dump 106 originating from the memory of computing device 102 is transmitted to server 104 over network 108. Network 108 may be the Internet, a mobile phone network, a data network (e.g., a 4G or LTE network), Bluetooth, or any combination thereof. For example, server 104 may be part of a cloud computing environment accessed via the Internet, or may be part of a local area network (LAN) with computing device 102. The lines connecting server 104 and computing device 102 to network 108 represent communication paths, which may include any combination of free-space connections (e.g., for wireless signals) and physical connections (e.g., fiber-optic cables). In some examples, the dump 106 may be transferred to server 104 as a separate entity, may be included in the backup archive, may be stored locally, or may be transferred to the cloud, etc.

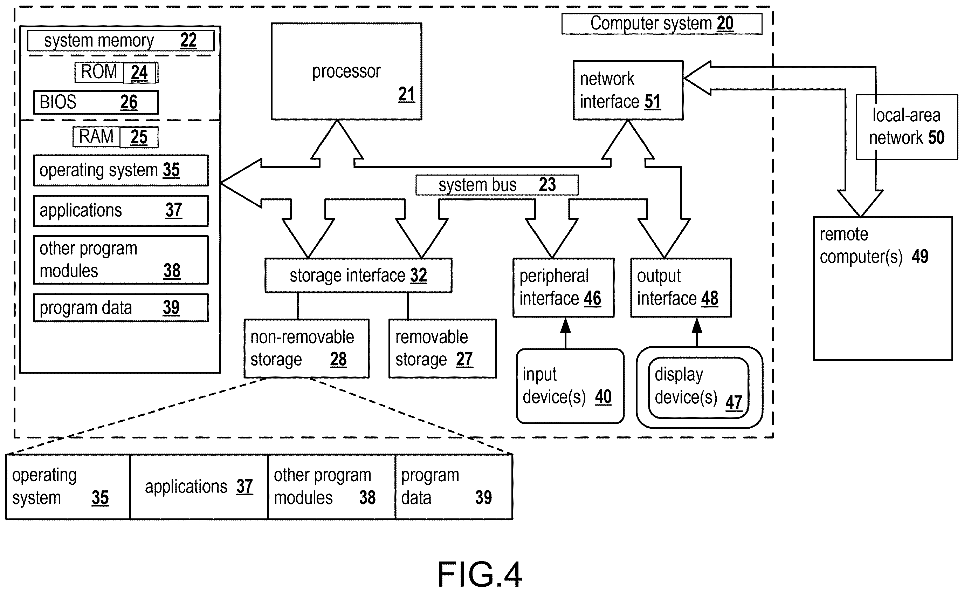

It should be noted that there may be more than one server 104, but only one is shown in FIG. 1 to avoid overcomplicating the drawing. For example, server 104 may represent a plurality of servers in a distributed cloud cluster. Server 104 may comprise any number of physical components (e.g., as shown in FIG. 4). For example, server 104 may comprise a number of physical components, e.g., processors, physical block storage devices (e.g., Hard Disk Drives (HDDs), Solid State Drives (SSDs), flash drives, SMR disks, etc.) or memory (e.g., Random Access Memory (RAM)), I/O interface components, etc.

Memory dump 106 may be any type of data including systems data, user data, applications, system files, preferences, documents, media, etc. Computing device 102 may send memory dump 106 for storage in server 104 in accordance with a backup schedule that indicates the specific data to include in memory dump 106 and the frequency at which the data should be backed up.

As described above, although backing up data allows for the preservation of information on a system (e.g., computing device 102), memory dumps are prone to tampering by intruders. Tampering may involve data theft and unauthorized data modification (e.g., encryption, embedding malicious agents in a memory dump, etc.). Accordingly, digital forensics agent 110 is configured to manage the collection of data for digital forensics and their subsequent processing. Digital forensics agent 110 may be a standalone program or a part of an antivirus software. In some examples, digital forensics agent 110 is installed on computing device 102 as a thin client and on a server as thick client. For the examples discussed in FIG. 1., digital forensics agent 110 is installed on computing device 102.

Digital forensics agent 110 comprises two components: forensics monitoring module 112 and anti-forensics protection module 114. Forensics monitoring module 112 may be configured to invoke the kernel API to produce a live dump. In some examples, module 112 may invoke the kernel API in response to receiving a request (e.g., from a user) or based on monitoring and detecting data in computing device 102 that should be used in a digital forensics investigation (e.g., data to be included in memory dump 106). Anti-forensics protection module 114 may be a driver configured to prevent the destruction of traces of malware activity. This driver determines whether data in memory dump 106 has been modified or destroyed by malware, and finds and restores the original, intact data.

Two approaches are discussed for acquiring memory dumps. The first is via the system service descriptor table (SSDT) and the second is using raw dumps. The examples presented in this disclosure are associated with the Windows^{™} operating system. One skilled in the art, however, would appreciate that the techniques can be applied to any operating system.

In the first approach, an internal dispatch table such as the SSDT is considered. The SSDT is a table of kernel function pointers used by the Windows^{™} operating system for dispatching system calls. Specifically, each entry in the SSDT points to a kernel function for a particular system call. In one scenario, a software application/process on computing device 102 may invoke a system call using a system call request. In response to the request, the CPU of computing device 102 switches from user mode to kernel mode and executes a system call dispatch function that reads a system call number. The system call number is a unique integer that is assigned to each system call in the operating system. On x86, the system call number is provided to the kernel via the eax register (e.g., the user-space places, in eax, the number corresponding to the desired system call). The dispatch function uses the call number as an index of the SSDT. In response to reading the pointer value from the SSDT, the dispatch function transfers execution to the kernel function in the kernel associated with the entry.

Because the SSDT contains important memory addresses of main kernel functions, the SSDT is a common target for hooking by malicious entities such as rootkits. Hooking refers to the alteration of software (e.g., applications, operating systems, etc.) via the interception of function calls, events, messages, etc. For example, a rootkit may replace existing kernel functions with its own address. Thus, when an application invokes a system call for a specific kernel function, the rootkit code is loaded instead.

A more detailed example is provided as such. The pointer to the structure of the SSDT may be KeServiceDescriptorTable (depending on the operating system of computing device 102). In Windows, using WinDbg, the command "dd dwo(KeServiceDescriptorTable) L100" will list the first 100 DWORDs of the SSDT structure. A DWORD stands for double word and is one of the five main data types handled by the Registry Editor. A DWORD value can hold a maximum of 32 bits, which are displayed by the registry in decimal or hexadecimal values. For simplicity, only a select few addresses will be shown in the examples below. When a rootkit is not active (e.g., at a first time), the output may be:
... 80501dcc 80607ac8 **8056f074** 805b3de0 8056f3ca ...
   When a rootkit is active (e.g., at a later time), however, the output of the command may be:
... 80501dcc 80607ac8 **f7c38486** 805b3de0 8056f3ca ...
   Comparing these two outputs clearly shows that the memory address "8056f074" has been replaced by "f7c38486." The system call number is the same for both addresses (e.g., 55). Therefore, by referring to the system call number, the replaced kernel function at "f7c38486" is called.

Accordingly, anti-forensics protection module 114 of digital forensics agent 110 checks whether the entry in the SSDT that points to the kernel function for generating memory dumps (e.g., NtSystemDebugControl) has been modified.

Referring to the previous example, NtSystemDebugControl may be associated with the memory address "8056f074." The memory address "f7c38486" may be for the unknown kernel function "MalwarePatch." Anti-forensics protection module 114 identifies the unknown kernel function "MalwarePatch" and checks the authenticity of the kernel function by determining whether the kernel function is in the NT OS kernel range. Determining whether the kernel function is in the NT OS kernel range involves checking the start and end addresses of the NT OS kernel (or, in some examples, a plurality of ranges) and checking if the kernel function address is in one of those ranges.

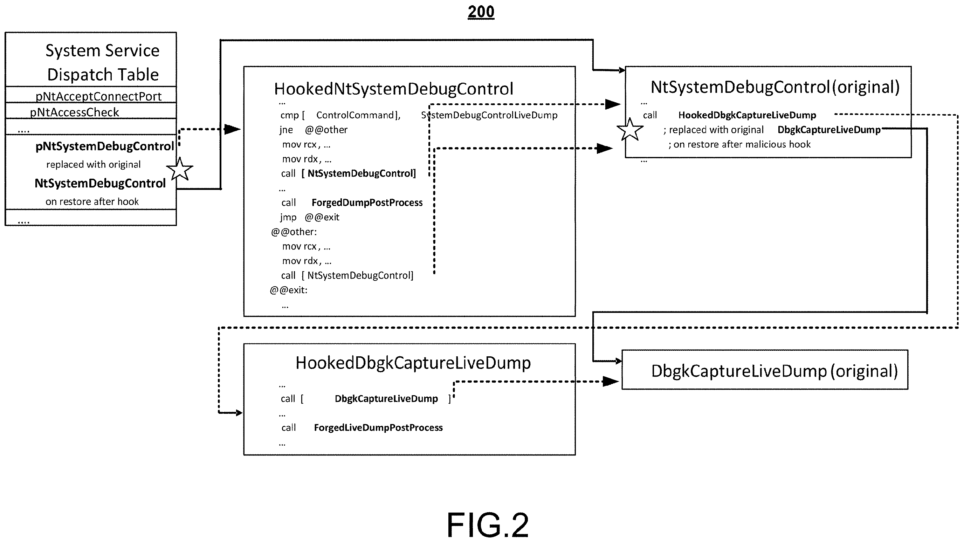

In some examples, anti-forensics protection module 114 may validate if the SSDT entry corresponding to NtSystemDebugControl indeed points to an authentic kernel code, rather than some "MalwarePatch" as described above. If a modification is detected in the SSDT, and the kernel function is deemed to be inauthentic (i.e., not in the NT OS kernel range), the offset (e.g., the call number of the service wherein the memory contents at the offset point to the actual kernel function) is used by anti-forensics protection module 114 to find the actual kernel function NtSystemDebugControl. Anti-forensics protection module 114 specifically finds the actual kernel function by building a call tree of a given depth, and passing through the tree to find the original kernel function (discussed further in FIG. 2).

The second approach for acquiring memory dumps involves acquiring raw dumps. In this approach, forensics monitoring module 112 obtains both the ranges of physical memory and the contents of data in the memory dump. Forensics monitoring module 112 may obtain the ranges using an interface such as "MmGetPhysicalMemoryRanges" in Windows NT OS Kernel. Similar to the first approach, anti-forensics protection module 114 accesses the operating system kernel of computing device 102, finds the current kernel function (i.e., the producer of the memory dump), and determines whether the kernel function is the original kernel function (i.e., the authentic kernel function). Anti forensics protection module 114 compares an on-disk kernel image and an in-memory kernel image to detect kernel fragments modified by malware to produce forged dumps. For example, anti-forensics protection module 114 compares MmGetPhysicalMemoryRanges in memory with MmGetPhysicalMemoryRanges in ntoskrnl.exe (or another NT OS Kernel main module).

If no tampering is detected, the kernel function is called. Otherwise, anti-forensics protection module 114 obtains, using dynamic disassembly, a call tree and finds a piece of memory corresponding to the original "good" kernel function. Dynamic disassembly refers to the monitoring, by an external tool such as a debugger, afile during execut ion. The original kernel function is called for producing an authentic memory dump, which is untampered. The address of the kernel function is the start address and the top of the call tree.

Another technique of malware patching is "splicing," which may also be applied to NtSystemDebugControl by a malicious software. In splicing, the malicious software patches the actual code of NtSystemDebugControl in-place without changing the pointer in SSDT The anti-forensics protection module 114 may detect such attack in the same way as described above for protection of the MmGetPhysicalMemoryRanges call sequence - via comparison of correspondent fragments of NtSystemDebugControl code in the memory and in the image of kernel retriever from the disk. For example, anti-forensics protection module 114 may find the location of NtSystemDebugControl in memory using the kernel debugger command "dd nt!ZwSystemDebugControl" and compare byte ranges, while taking into account that certain instructions contain variable offsets and adjustments. It should be noted that ZwSystemDebugControl is the exported kernel name for the entry to NtSystemDebugControl.

FIG. 2 is a block diagram illustrating call tree 200. Anti-forensics protection module 114 analyzes a call tree to identify an original kernel function authorized to produce memory dumps. Consider an example of traversing call tree 200 to find and use original kernel functions on the lived dump capture path. In this example, suppose that NtSystemDebugControl is hooked via SSDT and the call to DbgkCaptureLiveDump in the original NtSystemDebugControl is replaced with a call to HookedDbgkCaptureLiveDump.

Beginning from the SSDT, anti-forensics protection module 114 may confirm that a memory dump has been produced from a hooked kernel function by following the path of call tree 200 indicated by the dashed lines at the time the memory dump was produced. For example, the path of call tree 200 begins with HookedNtSystemDebugControl, which includes a call to NtSystemDebugControl. Because the original NtSystemDebugControl is hooked, rather than calling DbgkCaptureLiveDump, NtSystemDebugControl calls HookedDbgkCaptureLiveDump. HookedDbgkCaptureLiveDump calls the original DbgkCaptureLiveDump to produce a memory dump. Subsequently, using function ForgedLiveDumpPostProcess, HookedDbgkCaptureLiveDump modifies the memory dump. With HookedDbgkCaptureLiveDump completing its tampering, NtSystemDebugControl (original) completes its execution and HookedNtSystemDebugControl calls ForgedDumpPostProcess, which is another malicious function that may further tamper/corrupt the captured dump. As can be seen, the original kernel function is DbgkCaptureLiveDump and the current kernel function, which is unauthorized to produce memory dumps, is HookedDbgkCaptureLiveDump.

More specifically, anti-forensics protection module 114 may traverse call chain from SSDT to original internal calls. Anti-forensics protection module 114 may detect, via memory-to-disk comparison, places of installed hooks. For example, according to an in-memory kernel image, NtSystemDebugControl calls HookedDbgkCaptureLiveDump rather than DbgkCaptureLiveDump. In an on-disk kernel image, NtSystemDebugControl may instead call DbgkCaptureLiveDump, which is the correct kernel function to call. Anti-forensics protection module 114 may then rebuild call paths restoring original calls from the disk image. Upon a restore of the path of call tree 200, the pointer to HookedNtSystemDebugControl in the SSDT (see first star) will be replaced with NtSystemDebugControl and the call to HookedDbgkCaptureLiveDump (see second star) will be replaced with DbgkCaptureLiveDump. Thus, HookedNtSystemDebugControl is skipped and HookedDbgkCaptureLiveDump is not called. Lastly, anti-forensics protection module 114 may use the original kernel functions (following solid arrows in call tree 200) to facilitate production of an authentic memory dump.

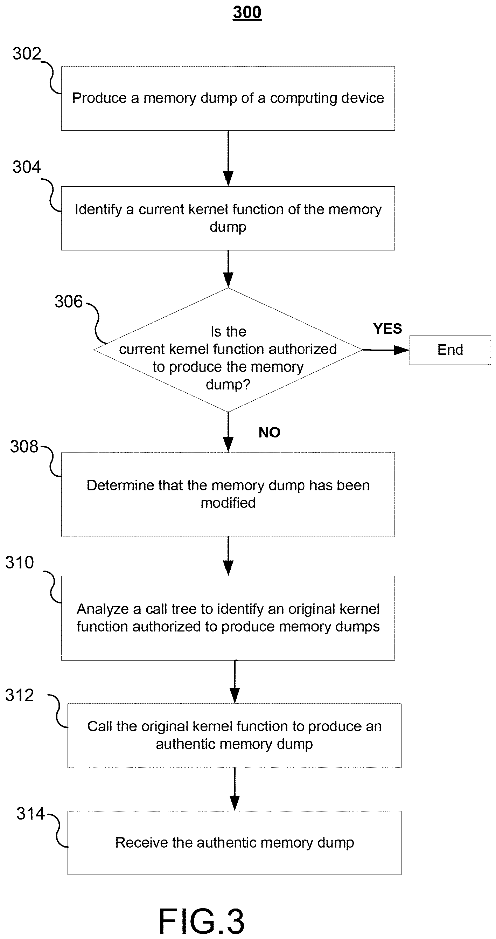

FIG. 3 illustrates a flow diagram of an exemplary method 300 for protecting against unauthorized memory dump modification. At 302, forensics monitoring module 112 produces a memory dump of a computing device (e.g., computing device 102). At 304, anti-forensics protection module 114 identifies a current kernel function that is used to produce the memory dump. At 306, anti-forensics protection module 114 determines whether the current kernel function is authorized to produce the memory dump. In response to determining that the current kernel function is authorized, method 300 ends. In response to determining that the current kernel function is not authorized, method 300 advances to 308, where anti-forensics protection module 114 determines that the memory dump has been modified. At 310, anti-forensics protection module 114 analyzes a call tree to identify an original kernel function authorized to produce memory dumps. At 312, forensics monitoring module 112 calls the original kernel function to produce an authentic memory dump. At 314, forensics monitoring module 112 receives the authentic memory dump.

FIG. 4 is a block diagram illustrating a computer system 20 on which systems and methods for protecting against unauthorized memory dump modification may be implemented in accordance with an exemplary aspect. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit 21 (also referred to as a processor) can include a single or multiple sets of processors having single or multiple cores. The processor 21 may execute one or more computer-executable code implementing the techniques of the present disclosure. For example, any of commands/steps discussed in FIGS. 1-2 may be performed by processor 21. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices.

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

Aspects of the present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

In various aspects, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and otherfunctions facilitated by a combination of hardware and software. In certain implementations, at least a portion, and in some cases, all, of a module may be executed on the processor of a computer system. Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

## Claims

1. A method (300) for protecting against unauthorized memory dump (106) modification, the method comprising:
producing (302), by a hardware processor, a memory dump (106) of a computing device (102);
identifying (304) , by the hardware processor, a current kernel function used for producing the memory dump (106);
determining (306), by the hardware processor, that the current kernel function is not authorized to produce the memory dump (106) by:
comparing an on-disk kernel image of the computing device (102) with an in-memory kernel image of the computing device (102);
identifying modified kernel fragments used to produce the memory dump (106) based on the comparison; and
determining that the modified kernel fragments are caused by malware;
in response to determining (306) that the current kernel function is not authorized to produce the memory dump (106):
determining (308), by the hardware processor, that the produced memory dump (106) has been modified;
analyzing (310), by the hardware processor, a call tree (200) to identify an original kernel function authorized to produce memory dumps (106); and
calling (312), by the hardware processor, the original kernel function to produce an authentic memory dump (106).

2. The method (300) according to claim 1, wherein determining that the current kernel function is not authorized to produce the memory dump (106) further comprises determining that an entry, in a dispatch table, that points to a kernel function for memory dumping has been modified.

3. The method (300) according to claim 2, wherein determining (308) that the entry has been modified comprises determining that an address associated with a system call number in the dispatch table at first time does not match an address associated with the system call number at a second time.

4. The method (300) according to claim 1, wherein determining that the current kernel function is not authorized to produce the memory dump (106) is further based on determining that an address of the current kernel function is not in an operating system kernel range of the computing device (102).

5. The method (300) according to any of claims 1 to 4, wherein analyzing (310) the call tree (200) to identify the original kernel function comprises determining an offset indicating the original kernel function based on contents of an entry in the call tree (200).

6. A system (100) for protecting against unauthorized memory dump (106) modification, the system (100) comprising:
a hardware processor (21) configured to:
produce (302) a memory dump (106) of a computing device (102);
identify (304) a current kernel function used for producing the memory dump (106);
determine (306) that the current kernel function is not authorized to produce the
memory dump (106) by:
comparing an on-disk kernel image of the computing device (102) with an in-memory kernel image of the computing device (102);
identifying modified kernel fragments used to produce the memory dump (106) based on the comparison; and
determining that the modified kernel fragments are caused by malware;
in response to determining (306) that the current kernel function is not authorized to produce the memory dump (106):
determine (308) that the produced memory dump (106) has been modified;
analyze (310) a call tree (200) to identify an original kernel function authorized to produce memory dumps (106); and
call (312) the original kernel function to produce an authentic memory dump (106).

7. The system (100) according to claim 6, the hardware processor (21) is configured to determine that the current kernel function is not authorized to produce the memory dump (106) by further determining that an entry, in a dispatch table, that points to a kernel function for memory dumping has been modified.

8. The system (100) according to claim 7, the hardware processor (21) is configured to determine (308) that the entry has been modified by determining that an address associated with a system call number in the dispatch table at first time does not match an address associated with the system call number at a second time.

9. The system (100) according to any of claims 6 to 8, the hardware processor (21) is configured to determine that the current kernel function is not authorized to produce the memory dump (106) further based on determining that an address of the current kernel function is not in an operating system kernel range of the computing device (102).

10. The system (100) according to any of claims 6 to 9, the hardware processor (21) is configured to analyze (310) the call tree (200) to identify the original kernel function by determining an offset indicating the original kernel function based on contents of an entry in the call tree (200).

## Patentansprüche

1. Verfahren (300) zum Schutz gegen unbefugte Modifikation eines Speicherabbilds (106), wobei das Verfahren umfasst:
Erzeugen (302) eines Speicherabbilds (106) einer Rechenvorrichtung (102) durch einen Hardware-Prozessor;
Identifizieren (304), durch den Hardware-Prozessor, einer aktuellen Kernel-Funktion, die zur Erzeugung des Speicherabbilds (106) verwendet wird;
Bestimmen (306), durch den Hardware-Prozessor, dass die aktuelle Kernel-Funktion nicht berechtigt ist, das Speicherabbild (106) zu erzeugen, durch:
Vergleichen eines Kernel-Bilds auf der Festplatte der Rechenvorrichtung (102) mit einem Kernel-Bild im Speicher der Rechenvorrichtung (102);
Identifizieren von modifizierten Kernel-Fragmenten, die zum Erzeugen des Speicherabbilds (106) verwendet wurden, auf Grundlage des Vergleichs; und
Bestimmen, dass die modifizierten Kernel-Fragmente durch Malware verursacht wurden;
als Reaktion auf das Bestimmen (306), dass die aktuelle Kernel-Funktion nicht berechtigt ist, das Speicherabbild (106) zu erzeugen:
Bestimmen (308), durch den Hardware-Prozessor, dass das erzeugte Speicherabbild (106) modifiziert wurde;
Analysieren (310) eines Aufrufbaums (200) durch den Hardwareprozessor, um eine ursprüngliche Kernel-Funktion zu identifizieren, die berechtigt ist, Speicherabbilde (106) zu erzeugen; und
Aufrufen (312) der ursprünglichen Kernel-Funktion durch den Hardwareprozessor, um ein authentisches Speicherabbild (106) zu erzeugen.

2. Verfahren (300) nach Anspruch 1, wobei das Bestimmen, dass die aktuelle Kernel-Funktion nicht berechtigt ist, das Speicherabbild (106) zu erzeugen, ferner das Bestimmen umfasst, dass ein Eintrag in einer Dispatch-Tabelle, der auf eine Kernel-Funktion für das Speicherabbild zeigt, modifiziert wurde.

3. Verfahren (300) nach Anspruch 2, wobei das Bestimmen (308), dass der Eintrag modifiziert wurde, das Bestimmen umfasst, dass eine Adresse, die einer Systemaufrufnummer in der Dispatch-Tabelle zu einem ersten Zeitpunkt zugeordnet ist, nicht mit einer Adresse übereinstimmt, die der Systemaufrufnummer zu einem zweiten Zeitpunkt zugeordnet ist.

4. Verfahren (300) nach Anspruch 1, wobei das Bestimmen, dass die aktuelle Kernel-Funktion nicht berechtigt ist, das Speicherabbild (106) zu erzeugen, ferner auf dem Bestimmen basiert, dass eine Adresse der aktuellen Kernel-Funktion nicht in einem Betriebssystem-Kernelbereich der Rechenvorrichtung (102) liegt.

5. Verfahren (300) nach einem der Ansprüche 1 bis 4, wobei das Analysieren (310) des Aufrufbaums (200) zum Identifizieren der ursprünglichen Kernel-Funktion das Bestimmen eines Versatzes, der die ursprüngliche Kernel-Funktion angibt, basierend auf Inhalten eines Eintrags in dem Aufrufbaum (200) umfasst.

6. System (100) zum Schutz gegen unbefugte Modifikation eines Speicherabbilds (106), wobei das System (100) aufweist:
einen Hardware-Prozessor (21), der konfiguriert ist:
ein Speicherabbild (106) einer Rechenvorrichtung (102) zu erzeugen (302);
eine aktuelle Kernel-Funktion, die zum Erzeugen des Speicherabbilds (106) verwendet wird, zu identifizieren (304);
zu bestimmen (306), dass die aktuelle Kernel-Funktion nicht berechtigt ist, das Speicherabbild (106) zu erzeugen, durch:
Vergleichen eines Kernel-Bilds auf der Festplatte der Rechenvorrichtung (102) mit einem Kernel-Bild im Speicher der Rechenvorrichtung (102);
Identifizieren von modifizierten Kernel-Fragmenten, die zum Erzeugen des Speicherabbilds (106) verwendet werden, auf Grundlage des Vergleichs; und
Bestimmen, dass die modifizierten Kernel-Fragmente durch Malware verursacht wurden;
als Reaktion auf das Bestimmen (306), dass die aktuelle Kernel-Funktion nicht berechtigt ist, das Speicherabbild (106) zu erzeugen:
Bestimmen (308), dass das erzeugte Speicherabbild (106) modifiziert wurde;
Analysieren (310) eines Aufrufbaums (200), um eine ursprüngliche Kernel-Funktion zu identifizieren, die berechtigt ist, Speicherabbilde (106) zu erzeugen; und
Aufrufen (312) der ursprünglichen Kernel-Funktion, um ein authentisches Speicherabbild (106) zu erzeugen.

7. System (100) nach Anspruch 6, wobei der Hardware-Prozessor (21) derart konfiguriert ist, dass er bestimmt, dass die aktuelle Kernel-Funktion nicht berechtigt ist, das Speicherabbild (106) zu erzeugen, indem er ferner bestimmt, dass ein Eintrag in einer Dispatch-Tabelle, der auf eine Kernel-Funktion für das Speicherabbild zeigt, modifiziert wurde.

8. System (100) nach Anspruch 7, wobei der Hardware-Prozessor (21) derart konfiguriert ist, dass er bestimmt (308), dass der Eintrag modifiziert wurde, indem er bestimmt, dass eine Adresse, die einer Systemaufrufnummer in der Versandtabelle zu einem ersten Zeitpunkt zugeordnet ist, nicht mit einer Adresse übereinstimmt, die der Systemaufrufnummer zu einem zweiten Zeitpunkt zugeordnet ist.

9. System (100) nach einem der Ansprüche 6 bis 8, wobei der Hardware-Prozessor (21) derart konfiguriert ist, dass er auf Grundlage des Bestimmens, dass eine Adresse der aktuellen Kernel-Funktion nicht in einem Betriebssystem-Kernelbereich der Rechenvorrichtung (102) liegt, bestimmt, dass die aktuelle Kernel-Funktion nicht berechtigt ist, das Speicherabbild (106) zu erzeugen.

10. System (100) nach einem der Ansprüche 6 bis 9, wobei der Hardware-Prozessor (21) derart konfiguriert ist, dass er den Aufrufbaum (200) analysiert (310), um die ursprüngliche Kernel-Funktion zu identifizieren, indem er einen Versatz, der die ursprüngliche Kernel-Funktion angibt, auf Grundlage von Inhalten eines Eintrags in dem Aufrufbaum (200) bestimmt.

## Revendications

1. Procédé (300) de protection contre une modification non autorisée de vidage de mémoire (106), le procédé comprenant :
la production (302), par un processeur matériel, d'un vidage de mémoire (106) d'un dispositif informatique (102) ;
l'identification (304), par le processeur matériel, d'une fonction noyau actuelle utilisée pour produire le vidage de mémoire (106) ;
la détermination (306), par le processeur matériel, selon laquelle la fonction noyau actuelle n'est pas autorisée pour produire le vidage de mémoire (106) par :
la comparaison d'une image de noyau sur disque du dispositif informatique (102) avec une image de noyau en mémoire du dispositif informatique (102) ;
l'identification de fragments de noyau modifiés utilisés pour produire le vidage de mémoire (106) sur la base de la comparaison ; et
la détermination selon laquelle les fragments de noyau modifiés sont provoqués par un logiciel malveillant ;
en réponse à la détermination (306) selon laquelle la fonction noyau actuelle n'est pas autorisée pour produire le vidage de mémoire (106) :
la détermination (308), par le processeur matériel, selon laquelle le vidage de mémoire (106) produit a été modifiée ;
l'analyse (310), par le processeur matériel, d'un arbre d'appel (200) pour identifier une fonction noyau originale autorisée pour produire des vidages de mémoire (106) ; et
l'appel (312), par le processeur matériel, de la fonction noyau originale pour produire un vidage de mémoire (106) authentique.

2. Procédé (300) selon la revendication 1, dans lequel la détermination selon laquelle la fonction noyau actuelle n'est pas autorisée pour produire le vidage de mémoire (106) comprend en outre la détermination selon laquelle une entrée, dans une table de distribution, qui pointe vers une fonction noyau pour le vidage de mémoire a été modifiée.

3. Procédé (300) selon la revendication 2, dans lequel la détermination (308) selon laquelle l'entrée a été modifiée comprend la détermination selon laquelle une adresse associée à un numéro d'appel de système dans la table de distribution à un premier instant ne correspond pas à une adresse associée au numéro d'appel de système à un second instant.

4. Procédé (300) selon la revendication 1, dans lequel la détermination selon laquelle la fonction noyau actuelle n'est pas autorisée pour produire le vidage de mémoire (106) est basée en outre sur la détermination selon laquelle une adresse de la fonction noyau actuelle n'est pas dans une plage de noyau de système d'exploitation du dispositif informatique (102).

5. Procédé (300) selon l'une quelconque des revendications 1 à 4, dans lequel l'analyse (310) de l'arbre d'appel (200) pour identifier la fonction noyau originale comprend la détermination d'un décalage indiquant la fonction noyau originale sur la base de contenus d'une entrée dans l'arbre d'appel (200).

6. Système (100) de protection contre une modification non autorisée de vidage de mémoire (106), le système (100) comprenant :
un processeur matériel (21) configuré pour :
produire (302) un vidage de mémoire (106) d'un dispositif informatique (102) ;
identifier (304) une fonction noyau actuelle utilisée pour produire le vidage de mémoire (106) ;
déterminer (306) que la fonction noyau actuelle n'est pas autorisée pour produire le vidage de mémoire (106) par :
la comparaison d'une image de noyau sur disque du dispositif informatique (102) avec une image de noyau en mémoire du dispositif informatique (102) ;
l'identification de fragments de noyau modifiés utilisés pour produire le vidage de mémoire (106) sur la base de la comparaison ; et
la détermination selon laquelle les fragments de noyau modifiés sont provoqués par un logiciel malveillant ;
en réponse à la détermination (306) selon laquelle la fonction noyau actuelle n'est pas autorisée pour produire le vidage de mémoire (106) :
déterminer (308) que le vidage de mémoire (106) produit a été modifié ;
analyser (310) un arbre d'appel (200) pour identifier une fonction noyau originale autorisée pour produire des vidages de mémoire (106) ; et
appeler (312) la fonction noyau originale pour produire un vidage de mémoire (106) authentique.

7. Système (100) selon la revendication 6, le processeur matériel (21) étant configuré pour déterminer que la fonction noyau actuelle n'est pas autorisée pour produire le vidage de mémoire (106) en déterminant en outre qu'une entrée, dans une table de distribution, qui pointe vers une fonction noyau pour le vidage de mémoire a été modifiée.

8. Système (100) selon la revendication 7, le processeur matériel (21) étant configuré pour déterminer (308) que l'entrée a été modifiée en déterminant qu'une adresse associée à un numéro d'appel de système dans la table de distribution à un premier instant ne correspond pas à une adresse associée au numéro d'appel de système à un second instant.

9. Système (100) selon l'une des revendications 6 à 8, le processeur matériel (21) étant configuré pour déterminer que la fonction noyau actuelle n'est pas autorisée pour produire le vidage de mémoire (106) sur la base en outre de la détermination selon laquelle une adresse de la fonction noyau actuelle n'est pas dans une plage de noyau de système d'exploitation du dispositif informatique (102).

10. Système (100) selon l'une des revendications 6 à 9, le processeur matériel (21) étant configuré pour analyser (310) l'arbre d'appel (200) pour identifier la fonction noyau originale en déterminant un décalage indiquant la fonction noyau originale sur la base de contenus d'une entrée dans l'arbre d'appel (200).
